# EUROPEAN PATENT SPECIFICATION

(11) **EP 4 319 066 B1**
(45) Date of publication and mention of the grant of the patent: **07.10.2026**
(21) Application number: 23196779.5
(22) Date of filing: 31.08.2017
(51) Int. Cl.: H04L 12/44, H04L 61/3015, H04L 101/365, H04L 12/28, H04L 67/12, H04L 101/69, H04W 4/33, H04W 4/50, H04W 4/80

(54) **WASHROOM DEVICE INSTALLATION SYSTEM**
WASCHRAUMVORRICHTUNGSINSTALLATIONSSYSTEM
SYSTÈME D'INSTALLATION DE DISPOSITIF DE TOILETTES

(43) Date of publication of application: 07.02.2024
(62) Document number(s) of the earlier application(s) in accordance with Art. 76 EPC: 17923736.7 / 3 676 994
(73) Proprietor: Kimberly-Clark Worldwide, Inc., Neenah, Wisconsin 54956 (US)
(72) Inventor: WILLIAMS, JR., Frederick J., Neenah, 54956 (US); WILSON, Alexandra L., Neenah, 54956 (US); GHAZI, Babak R., Neenah, 54956 (US)
(74) Representative: Dehns

(56) References cited:
- EP-A1- 3 682 616
- US-A1- 2016 313 712
- HAGLEITNER HYGIENE INTERNATIONAL GMBH: "HAGLEITNER senseMANAGEMENT, the intelligent washroom", 29 May 2014 (2014-05-29), pages 1 - 4, XP055394113, Retrieved from the Internet <URL:https://www.hagleitner.com/fileadmin/user_upload/brochure/senseMANAGEMENT_ENG_EZS_01.pdf> [retrieved on 20170726]

## Description

### TECHNICAL FIELD

This disclosure generally relates to joining (or installing) devices on a network, for example, a wireless network.

### BACKGROUND OF THE DISCLOSURE

Wireless networks are commonplace in many environments. Joining (or installing or commissioning) devices on a network can take many forms. Such a process may result in the device joining the network being assigned or receiving a name or reference identifier that, example, can be used to uniquely or quasi-uniquely identify that device within the network, e.g., for purposes or sending or receiving network communications. For example, the prior-art document US 2016/313712 A1 (MOHMEDI SAEID [CA]) 27 October 2016 (2016-10-27) discloses a system for controlling a plurality of devices in a public washroom facility having a controller with an integrated circuit including at least one logic block providing one or more predetermined control instructions to one or more of the plurality of devices via at least one control block; the at least one control block defining a communication interface between the integrated circuit and the plurality of devices; at least one communication block receiving data from a communications interface for programming the integrated circuit to modify the one or more predetermined control instructions. Another prior-art system generally disclosing a digital facility management system is represented by XP055394113, Hagleitner Hygiene International Gmbh: "HAGLEITNER senseMANAGEMENT, the intelligent washroom", 29 May 2014 (2014-05-29), pages 1-4.

### SUMMARY OF THE DISCLOSURE

In general, the subject matter of this specification relates to a system for joining a device, for example, a washroom device such as a hand towel dispenser, to a network. One aspect of the subject matter described in this specification can be implemented in a system according to claim 1

Particular embodiments of the subject matter described in this specification can be implemented so as to realize one or more of the following advantages. The device installation system described herein names devices joining the network in a manner that allows immediate recognition of the device location within a facility, such as a washroom or break room, by a quick glance or review of the device name. For example, based on the device name a reader, e.g., facility service attendant, can locate and identify the specific device in a room or area without having to (build and then) consult a table or list or memorize device names and corresponding locations. As such, the location of the device can be immediately recognized based on the device's name. For example, in the context of washroom hand towel dispenser, messages or alerts, including the dispenser's network name may be sent to service personnel when a dispenser needs to be refilled.

Thus through use of such a device naming convention the message or alert can simply include the device name and with that information alone the service personnel can easily locate the dispenser that needs the refill, as opposed to having to include additional location information in the message (which would require a larger message file and/or additional bandwidth and/or additional system resources) or otherwise requiring the service personnel to consult a list or table to determine the location or memorize device locations. Thus system resources are conserved, e.g., either because a shorter file or less transmission bandwidth is required for the message or because additional tables or lists linking device names to locations are not required to be generated.

The details of one or more implementations of the subject matter described in this specification are set forth in the accompanying drawings and the description below. Other features, aspects, and advantages of the subject matter will become apparent from the description, the drawings, and the claims.

### BRIEF DESCRIPTION OF DRAWINGS

Fig. 1A is a block diagram of an example environment in which a washroom device installation system can be implemented.
Fig. 1B is a block diagram of an example first protocol.
Fig. 1C is a block diagram of the example environment with multiple facilities managed by the washroom installation device.
Fig. 2 is an example method of generating configuration data for a facility.
Fig. 3 is a representation of an example facility.

Repeat use of reference characters in the present specification and drawings is intended to represent the same or analogous features or elements of the disclosure.

### DETAILED DESCRIPTION OF THE DISLOSURE

A naming process can be used to convey certain information about the device within the device's name. For example, a device name may include its device type (e.g., a code corresponding to a type such as mobile phone, laptop), manufacturer name, model number, etc. Thus, a user can readily learn certain information about the device without having to resolve an obtuse number or other identifier (e.g., a quasi-random alpha-numeric string) or cross check a separate database. Such information, for example, may assist a user to readily identify a certain device among a group of devices through a quick visual assessment of the devices.

The present disclosure generally relates to a system for joining (or installing) devices on a network, for example, a wireless network based on a predetermined naming sequence and sequence starting point that is common across all devices in a facility, e.g., a washroom or kitchen or break room. The system includes a data processing apparatus, that generates names for the devices being joined to the network according to a predetermined protocol, and a mobile installation tool that is used to identify such devices and communicate data specifying the device identities to the data processing apparatus for use in the naming process.

More particularly, in some implementations, the mobile installation tool, e.g., a tablet or smart phone with an associated application, is used to accept input specifying a unique identifier for each device in a facility to be joined to the network, e.g., by scanning a bar or QR code or querying the device according to a near-field communication protocol. The mobile installation tool provides the device identity information to the data processing apparatus, e.g., a server, according to a joining sequence such that the joining sequence conveys location information of the devices, relative to other devices in the facility, to the data processing apparatus. The data processing apparatus then names the devices in a facility such that the names carry, and readily convey, the location information of the device. In this way, the name of the device can be used to quickly find the device without more, e.g., without crosschecking a database or list. For example, in the context of a washroom with multiple hand towel dispensers, an alert may be sent notifying a custodian that a particular dispenser is running low on product. Rather than having to include a description or additional information as to the dispenser's exact location or have the custodian check each dispenser until the low product dispenser is identified, the device's name, included in the alert, can be used by the custodian to identify the device to be refilled.

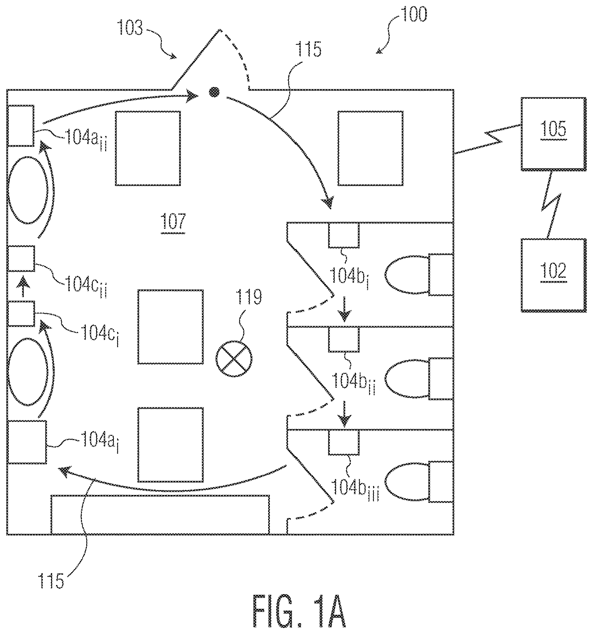

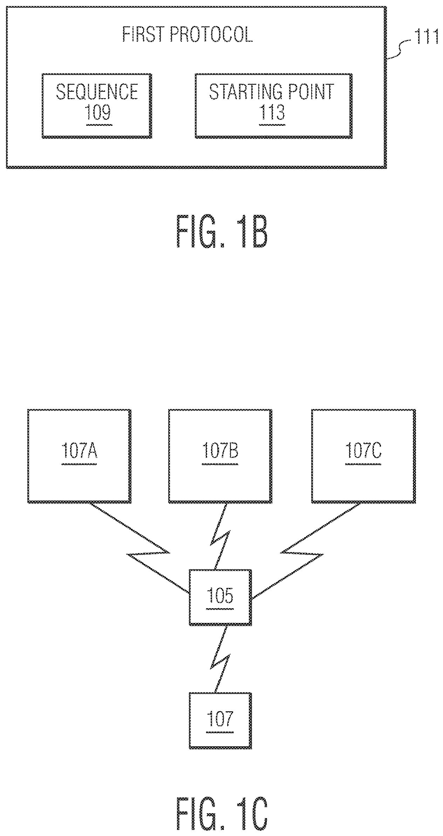

The protocol used to name the devices, when joined to the network, is based on the relative locations of the dispensers within the facility. For example, the protocol can specify the sequence in which the devices are to be joined or named such as starting from the device nearest the entry door in a clockwise direction and continuing in that same direction around the facility until all devices have been joined. Based on this sequence and information, for example, the data processing apparatus includes in the name of the first device in the sequence a unique location descriptor such as, for example, "1." The second device in the sequence would have a location descriptor of "2." This process continues with a similar incrementing or naming convention until each device in the facility is named. Thus when the device name includes a "2" as the location descriptor a reader, e.g., facility custodian, can determine that the device is the second device from the entry door in a clockwise direction. This system is described in more detail with reference to Fig. 1A, which is a block diagram of an example environment in which a washroom device installation system can be implemented, and Fig. 1B, which is a block diagram of an example first protocol.

The environment 100 in Fig. 1A includes a facility 107, e.g., a washroom, one or more end point devices 104, a data processing apparatus 102 and a mobile installation tool 105. More generally, the environment 100 can include one or more facilities 107, for example, a semi-private or public washroom 107, break room 107 or another defined space or area in which end point devices 104 are located. In some implementations, a facility is a closed or defined room or space with at least one door or entry/exit point. An end point device 104 is any device for which the data processing apparatus has or will generate a name for that device 104. In some implementations the device 104 is a network enabled device such that it has a receiver, transmitter or transceiver to communicate, through a wired or wireless connection, over a network and/or with the data processing apparatus 102. A end point device 104 can include, for example, a hand towel dispenser 104a, bath tissue dispenser 104b, hand soap (or other cleansing) dispenser 104c, hand or facial care dispenser (not pictured), surface cleaning, sanitizing or disinfecting dispenser (not pictured) including for toilets or urinals, and/or the like, door opening/closing counter, etc., each of these being a different type of end point device 104. As used herein, joining (or being installed on) a network means associating a device 104 with that network or the data processing apparatus 102 such that the data processing apparatus 102 can generate (and optionally assign) a name for that device 104, e.g., to identify that device on the network for, for example, sending and receiving messages with that device 104.

As described above, the data processing system 102, in some implementations, can communicate with devices 104 across wireless or wired channels, or some combination thereof. For example, the data processing apparatus 102 includes a transceiver and microprocessor to facilitate such communications. In some implementations, the data processing apparatus 102 is connected to a WAN or LAN to communicate to and with the end point devices 104 and other devices such as mobile devices, e.g., the mobile installation tool 105, and/or servers.

The data processing apparatus 102 generates, for each facility 107 in an environment 100, such as for a floor of a multi-floor building, a building or set of buildings, configuration data for the end point devices 104 that associate the end point devices 104 with the respective facility 107 based on a first protocol 111. For example, the configuration data include a name for each end point device 104 and an association between the end point device 104 and the facility 107 or building in which that device 104 is located. The name of the device 104 uniquely or quasi-uniquely identifies the device 104 in the environment 100. Fig. 1C is a block diagram of the example environment 100 with multiple facilities 107A-C managed by the data processing apparatus 102. In some implementations, the first protocol 111 (including the sequence 109), as described in more detail below, is the same for each facility 107 regardless of the types or number of end point devices 104.

The mobile installation tool 105, for each facility 107, communicates, e.g., wirelessly, installation data to the data processing apparatus 102 for use by the data processing apparatus 102 with a first protocol 111 that defines one or more rules for generating the naming information for the devices 104 based on (i) a sequence of the end point devices 104 according to the spatial orientations of the end point devices 104 (in their respective facility 107) and (ii) a reference defining a starting point for the sequence 109. The installation data specify an identifier of the device 104 (e.g., a serial number or MAC address of the device 104) and (in some implementations) the relative location of each device 104 in the facility 107. In some implementations, the relative location of each device 104 is conveyed to the data processing apparatus 102 by the order in which the installation data for a device is sent by the mobile installation tool 105. For example, as described in more detail below, the data processing apparatus 102 interprets that the first installation data received for a device 104 in a facility 107 has a relative position descriptor of "1," the second installation data (e.g., next in time or next in a processing queue) received for another device 104 in the facility 107 has a relative position descriptor of "2" and so on.

In other implementations, the relative location of each device 104 is conveyed to the data processing apparatus 102 by identifying the device 104 as having a particular place/order in the sequence 109. For example, the installation data, as generated by the mobile installation tool 105 may associate each device 104 as having a place in the sequence 109 such as, for example, the first device in the sequence 109 having a sequence order number of 1 and the third device in the sequence 109 having a sequence order number of 3.

In some implementations, the mobile installation tool 105 is a computer program that, for example, is running on a mobile computing system such as a smart phone, tablet or laptop. Such a computer program (also known as a program, software, software application, script, or code) can be written in any form of programming language, including compiled or interpreted languages, or declarative or procedural languages, and it can be deployed in any form, including as a stand alone program or as a module, component, subroutine, or other unit suitable for use in a computing environment.

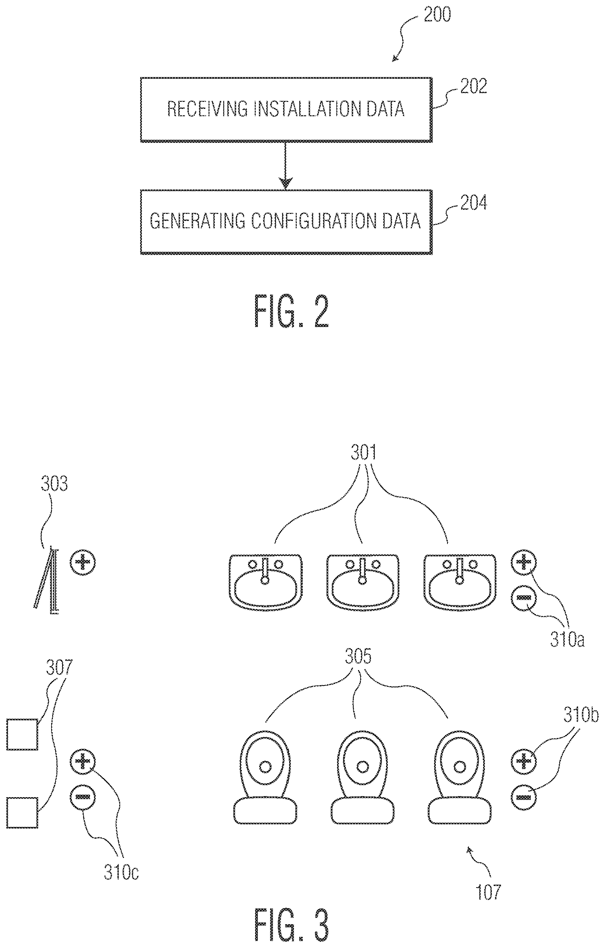

The operation of the data processing apparatus 102 and mobile installation tool 105 are described in more detail below with reference to Fig. 2, which is an example method 200 of generating configuration data for a facility 107.

Installation data is received, by a data processing apparatus, from a mobile installation tool (202). For example, the mobile installation tool 105 sends the installation data, for one or more devices 104 in a facility 107, to the data processing apparatus 102. The mobile installation tool 105 can be used, for example, by a user to join a device 104 to a network covering the facility 107 in which that device is (or is to be) located. In this scenario, for example, the user could use the mobile installation tool 105 to input a device identifier of the device 104, device make and model information, device type (e.g., hand towel dispenser or soap dispenser) and (or at least) relative device location information (e.g., first device from the door in a clockwise direction or "1" or "A," and/or men's first floor washroom in building X). The user could input such information into the tool 105 by, for example, typing the information through a keypad, using a graphical user interface to select from pre-defined options, reading/scanning a machine readable code (e.g., bar code or QR code), and/or using an near-field communication (NFC) process (or other wireless protocol/ process such as a BLUETOOTH scheme) to query the device 104 and obtain the information. In some implementations, the devices 104 will include a communication handshake initiation function that can broadcast the relevant information in response to a request, e.g., activating a push button on the device or receiving a wirelessly broadcast command.

The mobile installation tool 105 can send this installation data to the data processing apparatus 102 after it is gathered from each device, after such data is gathered for all devices 104 in the facility, floor or building or at some intermediate points, e.g., after gathering the information for two of four devices 104 in the facility 107, or at the user's direction.

Configuration data is generated, for each facility, for a plurality of end point devices at the facility, that associate the end point devices with the respective facility based on a first protocol and the installation data (204). For example, the data processing apparatus 102 generates the configuration data based on the installation data received from the mobile installation tool 105, as described above. The configuration data specify naming information for each of the end point devices 104 to uniquely identify each end point device (e.g., with respect to a facility 107, a building floor with more than one facility 107, a building having multiple floors, a set of buildings or across all devices 104). The naming information generation process is described in more detail below.

For any given facility 107 each of the end point devices 104 has a spatial orientation defining its position relative to a position of at least one other of the end point devices 104 (in a same facility) and/or another point of reference in the facility 107, e.g., a door or entryway 103 into or out of the facility 107. For example, with respect to the facility 107 in Fig. 1A, the device 104bᵢ is between the door 103 and the device 104bᵢᵢ. Or, with respect to a central reference point 119 in the facility 107, the device 104 bᵢ is the first device from the door 103 (e.g., a starting point) in a clockwise direction (e.g., along path 115). Likewise, the device 104bᵢᵢ is the third device from the door 103 in the clockwise direction, and the device 104cᵢᵢ is the sixth device from the door 103 in the clockwise direction.

With respect to a counterclockwise direction from the door 103, the device 104aᵢᵢ is the first device and the device 104cᵢᵢ is the second device. Other spatial orientation schemes are also envisioned. For example, the incrementing can be based on the type of device 104 in the facility 107 such that each common set of device types is numbered 1 to X, e.g., bath tissue dispenser 1 to X, hand towel dispenser 1 to X, hand soap dispenser 1 to X. In some implementations at least one facility 107 in a floor or building includes at least two different types of end point devices 104. The spatial orientation information is conveyed to the data processing apparatus 102 in the installation data from the mobile installation device 104, and the data processing apparatus 102 uses this orientation information and the first protocol 111 to generate the names of the devices 104.

The first protocol 111 defines one or more rules for generating the naming information based on (i) a sequence 109 of the end point devices 104 (e.g., based on the spatial orientations of the end point devices) and (ii) a reference defining a starting point 113 for the sequence 109. The sequence 109 defines the order in which the devices 104 are processed (e.g., named) based on the spatial orientation of the devices 104, e.g., in a clockwise or counterclockwise direction around the facility 107. The starting point 113 is used to identify the first device 104 in the sequence 109. For example, the starting point 113 can specify that the first device in the sequence 109 is the device closest to the door 103 (or other reference point in the facility 107) in a clockwise direction (or counterclockwise direction).

The rules can be programmatically defined, e.g., by an administrator in program code or scripts, and/or be fully or partially manually specified by an administrator. The rules can also specify additional naming conventions. For example, in the context of washroom facilities in a building, the convention can be "washroom gender/floor number-device type-device position in sequence," where washroom gender is male (M), female (FE) or family (FA); floor is the floor number on which the facility 107 is located so first floor would be 1, second floor would be 2 and so on; device type is the type of device such as hand towels dispenser (HT), bath tissue dispenser (BT), soap dispenser (SO) and so on; and device position in sequence is the number of the device in the sequence as described above.

Thus for a hand towel dispenser in the men's washroom on the first floor located second from the door according to the sequence 109 then the data processing apparatus 102 would name the device M1-HT-2. Likewise for a soap dispenser in the women's washroom on the third floor located third from the door according to the sequence then the data processing apparatus 102 would name the device W3-SO-3. In this way, for example, when a service attendant for the building receives a message indicating that a hand towel dispenser 104 needs to be serviced, e.g., because it is low on paper, the name of the dispenser 104 in the message informs the attendant as to the specific location of the dispenser 104, and the attendant can go directly to that dispenser 104 without having to crosscheck or consult another database or list. This further allows for a compact message, as opposed to including in the message a longer written description in prose, which requires additional bandwidth to transmit and is less efficient.

In some scenarios multiple of the same room type (e.g., two men's washrooms) may be on a single floor. Thus in some implementations, for example, the rules specify the following naming convention: "washroom gender/floor number-facility name qualifier-device type-device position in sequence," where the facility name qualifier can be set by an administrator or user. In some implementations, the qualifier is descriptive so as to immediately impart location information. For example, if the floor includes men's washrooms on the South and North sides of the building then the respective qualifier could be southside or northside. As such, for a hand towel dispenser in the men's washroom on the southside of the first floor located second from the door according to the sequence and a hand towel dispenser in the men's washroom on the northside of first floor located fourth from the door according to the sequence then the data processing apparatus 102 would name the devices, respectively, M1-southside-HT-2 and M1-northside-HT-4. The above examples have focused on washrooms but other types of facilities and devices are also envisioned such as, for example, devices in an office, break room, manufacturing area, food preparation area, etc.

In some implementations, the mobile installation tool 105 is configured to provide a graphical user interface 150 to present a user with options to select and arrange end point devices 104 in the spatial orientations to reflect a layout of a facility 107. Fig. 3 is a representation of an example facility 107. More specifically, Fig. 3 shows a screen of a viewing device, e.g., a smartphone, tablet or computer, displaying a representation of a facility 107 with three soap dispensers 301, a door 303, three bath tissue dispensers 305 and two towel dispensers 307. The mobile installation tool 105 can provide such a graphical user interface. The layout, e.g., spatial relationship, of the various items, i.e., 301-307, in the facility 107 are accurately reflected in this representation, and can be manipulated, e.g., rearranged, by a user through use of a graphical user interface of mobile installation tool 105 by, for example, drag and drop type functionality provided by the mobile installation tool 105.

Generally, the graphical user interface of the mobile installation tool 105 provides a user the ability to select a device 104 or reference point, e.g., from a menu, and place it in its relative position in the representation of the facility 107 on the screen. It also allows the user to increase or decrease the number of a particular type of device, e.g., through the increase or decrease device buttons 310 next to the particular device type 104. For example, to add another soap dispenser 301 the user would select the increase bottom from the button set 310a, and to remove a bath tissue dispenser 305 the user would select the decrease bottom from the button set 310b. Further once the devices 104 are placed on the representation the user can move them around to reflect their actual position relative to each other and the reference point, e.g., through a clicking and dragging process.

Once placed in the representation, the user can, through interaction with the graphical user interface, select each device 104 and collect an identifier, e.g., a MAC address or serial number, of the device 104 for use to generate the installation data. For example, the user can use the mobile installation tool 105 to a select a given device 104 on the representation and to scan and input the serial number of each device 104. In the way the mobile installation tool 105 associates the devices 104 with their respective positions in the facility 107 and their respective identifiers. Once the installation data is available, the mobile installation tool 105 send such data to the data processing apparatus 102 for generation of the configuration data, as described above.

When introducing elements of the present disclosure or the preferred embodiment(s) thereof, the articles "a", "an", "the" and "said" are intended to mean that there are one or more of the elements. The terms "comprising", "including" and "having" are intended to be inclusive and mean that there may be additional elements other than the listed elements. While this specification contains many specific implementation details, these should not be construed as limitations on the scope of any invention or of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Implementations of the subject matter and the operations described in this specification can be implemented in digital electronic circuitry, or in computer software, firmware, or hardware, including the structures disclosed in this specification and their structural equivalents, or in combinations of one or more of them. Implementations of the subject matter described in this specification can be implemented as one or more computer programs, i.e., one or more modules of computer program instructions, encoded on computer storage medium for execution by, or to control the operation of, data processing apparatus. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus or system on data stored on one or more computer-readable storage devices or received from other sources.

The term data processing apparatus or data processing system encompasses all kinds of apparatus, devices, and machines for processing data, including by way of example a programmable processor, a computer, a system on a chip, or multiple ones, or combinations, of the foregoing The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a user computer (e.g., for purposes of displaying data to and receiving user input from a user interacting with the user computer). Data generated at the user computer (e.g., a result of the user interaction) can be received from the user computer at the server.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

## Claims

1. A system comprising:
a data processing apparatus (102) configured to:
(i) generate, for each of a plurality of facilities (107), configuration data for end point devices (104) at each facility (107) that associate the end point devices (104) with the respective facility (107) based on a first protocol (111), wherein:
each of the end point devices (104) has a spatial orientation defining its position relative to a position of at least one other of the end point devices (104) in a same facility (107);
the configuration data specify naming information for each of the end point devices (104) to uniquely identify each end point device (104); and
the first protocol (111) defines one or more rules for generating the naming information based on: a sequence (109) of the end point devices (104) based on the spatial orientations of the end point devices (104); and a reference defining a starting point (113) for the sequence (109); and
(ii) communicate with a mobile installation tool (105) to receive installation data for use by the data processing apparatus (102) with the first protocol (111), the mobile installation tool (105) configured, for each of the plurality of facilities (107), to communicate the installation data to the data processing apparatus (102).

2. The system of claim 1, wherein the reference is a door (103).

3. The system of claim 1 or 2, wherein the sequence (109) is a clockwise rotation starting from the reference to an end point device (104) nearest the reference to any then next closest end point devices (104), in succession, to a last end point device (104) nearest the reference from a counterclockwise perspective.

4. The system of claim 1 or 2, wherein the sequence (109) is a counterclockwise rotation starting from the reference to an end point device (104) nearest the reference to any then next closest end point devices (104), in succession, to a last end point device (104) nearest the reference from a clockwise perspective.

5. The system of any preceding claim, wherein the installation data specifies an identifier of each respective end point device (104).

6. The system of any preceding claim, wherein the installation data specifies the relative location of each end point device (104) in the facility (107).

7. The system of any preceding claim, wherein the mobile installation tool (105) is configured to provide a graphical user interface (150) to present a user with options to select and arrange end point devices (104) in the spatial orientations to reflect a layout of a facility (107).

8. The system of any preceding claim, wherein the facilities (107) include a washroom.

9. The system of any preceding claim, wherein the end point devices (104) include one or more of a hand towel dispenser (104a), bath tissue dispenser (104b), and hand soap dispenser (104c).

10. The system of any preceding claim, wherein the configuration data includes a name for each end point device (104) and an association between the end point device (104) and the facility (107) in which that device (104) is located.

## Patentansprüche

1. System, umfassend:
eine Datenverarbeitungseinrichtung (102), die konfiguriert ist zum:
(i) Erzeugen, für jede einer Vielzahl von Anlagen (107), von Konfigurationsdaten für Endpunktvorrichtungen (104) in jeder Anlage (107), die die Endpunktvorrichtungen (104) basierend auf einem ersten Protokoll (111) mit der jeweiligen Anlage (107) verknüpfen, wobei:
jede der Endpunktvorrichtungen (104) eine räumliche Ausrichtung aufweist, die ihre Position relativ zu einer Position von mindestens einer anderen der Endpunktvorrichtungen (104) in einer selben Anlage (107) definiert;
die Konfigurationsdaten Benennungsinformationen für jede der Endpunktvorrichtungen (104) spezifizieren, um jede Endpunktvorrichtung (104) eindeutig zu kennzeichnen; und
das erste Protokoll (111) eine oder mehrere Regeln zum Erzeugen der Benennungsinformationen definiert, basierend auf: einer Sequenz (109) der Endpunktvorrichtungen (104) basierend auf den räumlichen Ausrichtungen der Endpunktvorrichtungen (104); und einer Referenz, die einen Ausgangspunkt (113) für die Sequenz (109) definiert; und
(ii) Kommunizieren mit einem mobilen Installationswerkzeug (105), um Installationsdaten zur Verwendung durch die Datenverarbeitungseinrichtung (102) mit dem ersten Protokoll (111) zu empfangen, wobei das mobile Installationswerkzeug (105) konfiguriert ist, um für jede der Vielzahl von Anlagen (107) die Installationsdaten an die Datenverarbeitungseinrichtung (102) zu kommunizieren.

2. System nach Anspruch 1, wobei die Referenz eine Tür (103) ist.

3. System nach Anspruch 1 oder 2, wobei die Sequenz (109) eine Drehung im Uhrzeigersinn, die von der Referenz ausgeht, zu einer Endpunktvorrichtung (104), die der Referenz am nächsten ist, nacheinander zu beliebigen daraufhin am nächsten gelegenen Endpunktvorrichtungen (104) bis zu einer letzten Endpunktvorrichtung (104) ist, die der Referenz aus einer Perspektive entgegen dem Uhrzeigersinn am nächsten ist.

4. System nach Anspruch 1 oder 2, wobei die Sequenz (109) eine Drehung entgegen dem Uhrzeigersinn, die von der Referenz ausgeht, zu einer Endpunktvorrichtung (104), die der Referenz am nächsten ist, nacheinander zu beliebigen daraufhin am nächsten gelegenen Endpunktvorrichtungen (104) bis zu einer letzten Endpunktvorrichtung (104) ist, die der Referenz aus einer Perspektive im Uhrzeigersinn am nächsten ist.

5. System nach einem der vorstehenden Ansprüche, wobei die Installationsdaten eine Kennung jeder jeweiligen Endpunktvorrichtung (104) spezifizieren.

6. System nach einem der vorstehenden Ansprüche, wobei die Installationsdaten den relativen Standort jeder Endpunktvorrichtung (104) in der Anlage (107) spezifizieren.

7. System nach einem der vorstehenden Ansprüche, wobei das mobile Installationswerkzeug (105) konfiguriert ist, um eine grafische Benutzerschnittstelle (150) bereitzustellen, um einem Benutzer Optionen zu präsentieren, um Endpunktvorrichtungen (104) in den räumlichen Ausrichtungen auszuwählen und anzuordnen, um ein Layout einer Anlage (107) widerzuspiegeln.

8. System nach einem der vorstehenden Ansprüche, wobei die Anlagen (107) einen Waschraum einschließen.

9. System nach einem der vorstehenden Ansprüche, wobei die Endpunktvorrichtungen (104) einen oder mehrere von einem Handtuchspender (104a), Toilettenpapierspender (104b) und Handseifenspender (104c) einschließen.

10. System nach einem der vorstehenden Ansprüche, wobei die Konfigurationsdaten einen Namen für jede Endpunktvorrichtung (104) und eine Verknüpfung zwischen der Endpunktvorrichtung (104) und der Anlage (107), in der sich jene Vorrichtung (104) befindet, einschließen.

## Revendications

1. Système comprenant :
un appareil de traitement de données (102) configuré pour :
(i) générer, pour chacune d'une pluralité d'installations (107), des données de configuration pour des dispositifs de point d'extrémité (104) au niveau de chaque installation (107) qui associent les dispositifs de point d'extrémité (104) à l'installation respective (107) sur la base d'un premier protocole (111), dans lequel :
chacun des dispositifs de point d'extrémité (104) a une orientation spatiale définissant sa position par rapport à une position d'au moins un autre des dispositifs de point d'extrémité (104) dans une même installation (107) ;
les données de configuration spécifient des informations de dénomination pour chacun des dispositifs de point d'extrémité (104) afin d'identifier de manière unique chaque dispositif de point d'extrémité (104) ; et
le premier protocole (111) définit une ou plusieurs règles permettant de générer les informations de dénomination en fonction : d'une séquence (109) des dispositifs de point d'extrémité (104) sur la base des orientations spatiales des dispositifs de point d'extrémité (104) ; et une référence définissant un point de départ (113) pour la séquence (109) ; et
(ii) communiquer avec un outil d'installation mobile (105) pour recevoir des données d'installation destinées à être utilisées par l'appareil de traitement de données (102) avec le premier protocole (111), l'outil d'installation mobile (105) étant configuré, pour chacune de la pluralité d'installations (107), pour communiquer les données d'installation à l'appareil de traitement de données (102).

2. Système selon la revendication 1, dans lequel la référence est une porte (103).

3. Système selon la revendication 1 ou 2, dans lequel la séquence (109) est une rotation dans le sens des aiguilles d'une montre partant de la référence vers un dispositif de point d'extrémité (104) le plus proche de la référence par rapport à l'un quelconque dispositif de point d'extrémité (104) le plus proche, successivement, jusqu'à un dernier dispositif de point d'extrémité (104) le plus proche de la référence dans le sens inverse des aiguilles d'une montre.

4. Système selon la revendication 1 ou 2, dans lequel la séquence (109) est une rotation dans le sens inverse des aiguilles d'une montre partant de la référence vers un dispositif de point d'extrémité (104) le plus proche de la référence par rapport à l'un quelconque dispositif de point d'extrémité (104) le plus proche, successivement, jusqu'à un dernier dispositif de point d'extrémité (104) le plus proche de la référence dans le sens des aiguilles d'une montre.

5. Système selon l'une quelconque revendication précédente, dans lequel les données d'installation spécifient un identifiant de chaque dispositif de point d'extrémité (104) respectif.

6. Système selon l'une quelconque revendication précédente, dans lequel les données d'installation spécifient l'emplacement relatif de chaque dispositif de point d'extrémité (104) dans l'installation (107).

7. Système selon l'une quelconque revendication, dans lequel l'outil d'installation mobile (105) est configuré pour fournir une interface utilisateur graphique (150) afin de présenter à un utilisateur des options pour sélectionner et agencer des dispositifs de point d'extrémité (104) dans les orientations spatiales pour refléter une disposition d'une installation (107).

8. Système selon l'une quelconque revendication précédente, dans lequel les installations (107) comportent une salle de bain.

9. Système selon l'une quelconque revendication précédente, dans lequel les dispositifs de point d'extrémité (104) comportent un ou plusieurs parmi un distributeur d'essuie-mains (104a), un distributeur de papier hygiénique (104b) et un distributeur de savon pour les mains (104c).

10. Système selon l'une quelconque revendication précédente, dans lequel les données de configuration comportent un nom pour chaque dispositif de point d'extrémité (104) et une association entre le dispositif de point d'extrémité (104) et l'installation (107) dans laquelle ce dispositif (104) est situé.
